# EUROPÄISCHE PATENTSCHRIFT

(11) **EP 2 920 498 B1**
(45) Veröffentlichungstag und Bekanntmachung des Hinweises auf die Patenterteilung: **21.02.2018**
(21) Anmeldenummer: 13792879.2
(22) Anmeldetag: 12.11.2013
(51) Int. Cl.: F16K 31/02

(54) **ABSCHALTVENTIL FÜR FLÜSSIGE UND GASFÖRMIGE MEDIEN**
SHUT-OFF VALVE FOR LIQUID AND GASEOUS MEDIA
VANNE D'ARRÊT POUR FLUIDES LIQUIDES ET GAZEUX

(30) Priorität: 19.11.2012 DE 202012104460 U
(43) Veröffentlichungstag der Anmeldung: 23.09.2015
(73) Patentinhaber: Otto Egelhof GmbH & Co. KG, 70736 Fellbach (DE)
(72) Erfinder: SOHN, Jürgen, 73732 Esslingen (DE)
(74) Vertreter: Mammel und Maser
(86) Internationale Anmeldenummer: PCT/EP2013/073557
(87) Internationale Veröffentlichungsnummer: WO 2014/076051

(56) Entgegenhaltungen:
- WO-A1-02/50460
- JP-A- H1 163 739
- JP-A- S6 119 368
- JP-A- S6 235 185
- JP-A- H02 125 188
- JP-U- H0 229 378
- US-A1- 2010 273 078

## Beschreibung

Die Erfindung betrifft ein Abschaltventil für flüssige oder gasförmige Medien gemäß dem Oberbegriff des Anspruchs 1.

Aus der JP S 61 193 68 A ist ein Abschaltventil für flüssige Medien bekannt. Dieses weist ein Ventilgehäuse mit einer Durchgangsöffnung auf, die eine Einlassöffnung mit einer Auslassöffnung verbindet. An dem Ventilgehäuse ist ein Antrieb anschließbar, der ein Ventilschließglied zum Öffnen oder Schließen des Durchgangs betätigt. Des Weiteren ist ein Rückstellelement vorgesehen, welches einer Öffnungs- oder Schließbewegung des Ventilschließgliedes entgegenwirkt. Durch ein Abdichtungselement ist ein Antrieb zum Regulierraum getrennt angeordnet. Das Abdichtungselement ist als Balgelement ausgebildet, wobei dessen bewegbarer Boden, an dem das Ventilschließglied anordenbar ist, der Durchgangsbohrung zugeordnet ist.

Die JP H 02 125188 A zeigt ein doppeltes, hitzesensitives Abschaltventil. Eine Durchgangsbohrung in dem Ventilgehäuse wird durch ein Ventilschließglied geöffnet und geschlossen, welches von einem Balgelement aufgenommen ist. In dem Balgelement ist ein Stellelement aus einer Formgedächtnislegierung vorgesehen, welches einerseits unmittelbar am Ventilschließglied und anderseits an einer gegenüberliegenden Gehäusewand angreift. Zusätzlich ist in dem Balgelement ein elektrisches Heizelement vorgesehen, um das Stellelement aus der Formgedächtnislegierung zu aktivieren.Die JP H 11 63739 A offenbart ein Druckregelventil, bei welchem ein Ventilschließglied mit einem spiralförmigen Federelement aus einer Formgedächtnislegierung für eine Schließbewegung angesteuert wird.

Die JP S 62 35185 A offenbart ein über ein Balgelement angesteuertes Ventil. Dabei ist vorgesehen, dass die Öffnungs- und Schließbewegung des Ventilschließgliedes durch das Balgelement angesteuert wird, welches selbst aus einer Formgedächtnislegierung besteht. Zur Ansteuerung des Ventils wird das Balgelement bestromt, um das Ventilschließglied zu betätigen.

Die JP H 02 29378 U offenbart ein Abschaltventil, bei welchem eine Stellbewegung des Ventilschließgliedes durch eine Spiralfeder angesteuert wird, welche eine verfahrbare Gehäusehälfte, an welcher das Ventilschließglied angeordnet ist, gegenüber einer zweiten Gehäusehälfte bewegt, wobei dieser Stellbewegung entgegenwirkend ein weiteres Federelement vorgesehen ist, um eine Rückstellbewegung zu erzielen.

Die US 2010/273078 A1 offenbart eine Brennstoffzelle, durch welche ein Abschaltventil angesteuert wird. Dieses Abschaltventil, das die Merkmale des Oberbegriffs des Anspruchs 1 aufweist, umfasst einen bewegbaren Anker, der thermisch mittels eines Federelementes aus einer Formgedächtnislegierung verfahren wird. Der Anker ist innerhalb einer Membran oder eines bewegbaren Films angeordnet, der eine Öffnungs- und Schließbewegung des Ankers ermöglicht. Zum Öffnen des Ventils wird mittels einer Steuerung eine elektrische Spule des Magnetantriebs bestromt, um eine Stellkraft auf den Anker auszuüben, der das Federelement überlagert.

Die WO 02/50460 A1 offenbart ein elektrisch ansteuerbares Hydraulikventil. Dabei ist vorgesehen, dass zwei in entgegengesetzter Richtung wirkende Stellelemente aus einer Formgedächtnislegierung angesteuert werden, um eine Öffnungs- und Schließbewegung zu erzielen. Diese Druckschrift offenbart weder die Ausbildung eines Abdichtungselementes als Balgelement noch die Anordnung eines Deckels am Ventilgehäuse zur Bildung eines geschlossenen Arbeitsraums.

Aus der DE 10 2004 049 790 B4 ist ein solches Abschaltventil für flüssige oder gasförmige Medien bekannt. Dieses Schaltventil weist ein Ventilgehäuse mit einer Durchgangsöffnung auf, welche eine Einlassöffnung mit einer Auslassöffnung verbindet. Ein Ventilsitz umgibt die Durchlassöffnung und ist am Ventilgehäuse angeordnet, welches durch ein Ventilschließglied betätigbar ist. Hierfür ist ein elektromagnetischer Antrieb vorgesehen, welcher in Abhängigkeit eines Stromimpulses das Ventilschließglied öffnet oder schließt. Diese Abschaltventile können in einen Anschlussblock einsetzbar sein, der als sogenanntes "Zwei-Port-Gehäuse" ausgebildet ist. Ebenfalls können solche Schaltventile Teil eines Expansionsventils sein und in ein sogenanntes "Vier-Port-Gehäuse" eingesetzt werden.

Solche Abschaltventile haben sich grundsätzlich bewährt. Allerdings weist die für den Antrieb verwendete Spule hohe Einschalt- und Abschaltimpulse auf, welche für bestimmte Anwendungen unerwünscht sind. Darüber hinaus werden für diese Spulen als Werkstoff seltene Erden verwendet, die aufgrund der Rohstoffknappheit zunehmend teurer werden.

Aus der DE 10 2005 060 217 B4 ist ein Druckluftventil mit einem Ventilgehäuse bekannt, bei dem eine Öffnungs- und Schließbewegung eines Ventils mit einem draht- oder bandförmigen SMA-Element angesteuert wird. Des Weiteren ist aus der DE 196 10 065 A1 ein Thermostatventil für eine Fußbodenheizung bekannt, welches ebenfalls mit einem Stellelement aus einer Formgedächtnislegierung angetrieben ist. Gleiches gilt für ein Ventil gemäß der US 3,835,659. Bei allen vorgenannten Druckschriften sind die Stellelemente aus der Formgedächtnislegierung innerhalb des zu regulierenden Mediums vorgesehen beziehungsweise werden von diesem umströmt, so dass die Temperatur des zu steuernden Mediums unmittelbar auf die Formgedächtnislegierung des Stellelementes einwirkt.

Aus der DE 20 2010 010 747 U1 ist ein Antrieb für ein Mikroventil mit einer Formgedächtnislegierung vorgesehen, bei welchem zwischen dem Ventilschließglied und der Durchgangsbohrung eine Membran eingespannt ist. Diese Membran wirkt als Dichtungselement bei einem in einer Schließposition angeordneten Ventilschließglied, um den Ventilsitz an der Durchgangsöffnung abzudichten. Dies weist den Nachteil auf, dass das Ventil beim Öffnen und Schließen die Membran betätigen und in den Ventilsitz pressen muss, um ein Schließen des Mikroventils zu erzielen. Hierfür sind zum einen hohe Kräfte erforderlich und zum anderen eine erhöhte Abnutzung der Dichtung durch die Quetschung gegeben, insbesondere auch beim Einsatz von aggressiven Medien.

Der Erfindung liegt die Aufgabe zugrunde, ein Abschaltventil vorzuschlagen, bei welchem Funktionen des vorgenannten Abschaltventils beibehalten, der Einsatz von seltenen Erden und die hohen Ein- und Ausschaltimpulse vermieden werden sowie eine Anpassung an einer Schaltaufgabe ermöglicht wird.

Diese Aufgabe wird erfindungsgemäß durch die Merkmale des Anspruchs 1 gelöst. Weitere vorteilhafte Ausgestaltungen und Weiterbildungen sind in den weiteren Ansprüchen angegeben.

Durch die Ausgestaltung eines Abschaltventils mit einem Antrieb zur Ansteuerung einer Öffnungs- oder Schließbewegung des Ventilschließgliedes, bei dem zumindest ein Stellelement aus einer Formgedächtnislegierung eingesetzt wird, welches einem Rückstellelement entgegenwirkt und der Trennung dieses Antriebs durch ein Abdichtungselement zu einem Regulierraum, der zwischen der Einlassöffnung und der Durchgangsbohrung oder der Durchgangsbohrung und der Auslassöffnung des Ventilgehäuses liegt, wird ein alternativer Bewegungsantrieb vorgeschlagen, der auf den Antrieb mit einer Magnetspule verzichtet. Diese erfindungsgemäße Anordnung kann gegenüber dem Antrieb mit der Magnetspule eine Gewichtseinsparung aufweisen. Darüber hinaus fallen durch die Ansteuerung des Antriebs mittels eines Stellelementes aus einer Formgedächtnislegierung geringe Ein- und Ausschaltströme an, wobei die Reaktions- und Schaltzeiten beibehalten werden können. Des Weiteren weist der Einsatz des Abdichtelementes mit dem daran angeordneten Ventilschließglied in Verbindung mit dem Antrieb den Vorteil auf, dass dieses Abdichtungselement das gasförmige oder flüssige Medium gegenüber dem Antrieb abschirmt, so dass dieses Stellelement aus der Formgedächtnislegierung unabhängig des Zustands von Druck und/oder Temperatur und/öder Art des flüssigen oder gasförmigen Mediums betätigbar ist und die bisherige Ventilsitzanordnung des Ventilschließgliedes im Ventilsitz beibehält. Des Weiteren wird durch das Antriebsmodul, welches einen Deckel und ein Abdichtungselementes sowie den Antrieb, insbesondere das Stellelement aus einer Formgedächtnislegierung, umfasst eine einfache Montage ermöglicht. Dadurch kann ebenso ein einfacher Austausch ermöglicht sein. Des Weiteren können an die jeweilige Schaltaufgabe angepasste Arbeitsmodule bereitgestellt, eingesetzt und/oder ausgetauscht werden. Durch die Einspannung des Befestigungsabschnitts des Abdichtungselements mit dem Deckel an dem hülsenförmigen Gehäuseabschnitt ist eine einfache abdichtende Anordnung des Regulierraums einerseits und des Arbeitsraums andererseits gegeben, so dass auch eine mediendichte Trennung vorliegt.

Gemäß der Erfindung, ist es vorgesehen, dass das Ventilgehäuse einen hülsenförmigen Gehäuseabschnitt aufweist, der die Durchgangsbohrung umgibt und an einem der Durchgangsbohrung gegenüber liegenden Ende das Abdichtungselement aufnimmt und den Regulierraum schließt. Der Regulierraum wird zum einen durch das Ventilgehäuse mit der Durchgangsbohrung begrenzt sowie durch den daran angeordneten hülsenförmigen Gehäuseabschnitt, der zumindest eine Einlassöffnung aufweist, welche das flüssige oder gasförmige Medium zur Durchgangsbohrung führt. Das dem Ventilgehäuse gegenüber liegende Ende des hülsenförmigen Gehäuseabschnitts wird durch das Abdichtungselement geschlossen, das heißt, dass der dazwischen liegende Regulierraum hermetisch abgeschlossen werden kann. Diese Anordnung weist des Weiteren den Vorteil auf, dass flüssiges oder gasförmiges Medium nicht nach außen in die Umgebung austreten kann.

Das Abdichtungselement ist bevorzugt als Balgelement ausgebildet, welches an dem Ventilgehäuse, insbesondere dem hülsenförmigen Gehäuseabschnitt, befestigt und dessen bewegbarer Boden der Durchgangsbohrung zugeordnet ist. Dadurch kann das Abdichtungselement gleichzeitig als Teil des Ventilschließgliedes eingesetzt werden. Auch kann sich der Antrieb zumindest teilweise innerhalb des Balgelementes bis zum Boden erstrecken, um das Ventilschließglied anzusteuern. Dadurch kann eine kompakte und kleinbauende Anordnung geschaffen werden.

Das als Balgelement ausgebildete Abdichtungselement kann vorteilhafterweise an einem dem Boden gegenüber liegenden Ende einen Deckel aufnehmen, so dass ein geschlossener Arbeitsraum ausgebildet ist, in dem der Antrieb angeordnet ist. Der Deckel greift an dem Befestigungsabschnitt des Abdichtungselementes an, so dass der Innenraum des Balgelementes einerseits und der Innenraum des Deckels andererseits den geschlossenen Arbeitsraum bilden. Dadurch kann der darin angeordnete Antrieb gegen äußere Einflüsse, wie Umwelteinflüsse, geschützt sein. Dieser Arbeitsraum ist frei von dem zu steuernden Medium.

An dem den Arbeitsraum abschließenden Deckel ist zumindest eine Anschlussöffnung für Steuerleitungen vorgesehen. Weitere Schnittstellen für diesen Antrieb und des Abschaltventils sind nicht erforderlich, das heißt, dass eine einfache Abdichtung für die Zuführung der Steuerleitungen möglich und unabhängig der klimatischen Einsatzbedingungen eine Abschirmung des Arbeitsraumes gegeben ist.

Das Ventilgehäuse sowie der daran angeordnete hülsenförmige Gehäuseabschnitt und vorzugsweise der daran anordenbare Deckel sind zylinderförmig ausgebildet und können zumindest teilweise in einen Anschlussblock einsetzbar sein. Durch eine solche Ausgestaltung ist das Abschaltventil als Einbaueinheit oder als Einbaupatrone ausgebildet, welche in die entsprechenden Anschlussblöcke oder Anschlussgehäuse einsetzbar ist. Die Anschlussblöcke können als Zwei- oder Vier-Port-Gehäuse ausgebildet sein, wie diese aus dem Stand der Technik bekannt sind.

Der Antrieb umfasst ein rohrförmiges, schlauchförmiges, stabförmiges, käfigförmiges oder plattenförmiges Heizelement, welches dem Stellelement zugeordnet ist. Dadurch kann in einfacher Weise eine Ansteuerung des aus einer Formgedächtnislegierung bestehenden Stellelementes gegeben sein.

Eine weitere bevorzugte Ausgestaltung der Erfindung sieht vor, dass das Abdichtungselement als Stellelement aus der Formgedächtnislegierung ausgebildet ist. Diese integrierte Anordnung der beiden Bauteile in ein Bauteil weist den Vorteil auf, dass eine Reduzierung der Bauteile ermöglicht ist.

Das Abdichtungselement weist an seiner Außenseite des Bodens, welcher zum Ventilsitz weist, ein Ventilschließglied auf. Dies ermöglicht eine konstruktiv einfache und platzsparende Anordnung.

Ein solches Ventilschließglied kann bevorzugt scheibenförmig ausgebildet sein und aus Kunststoff bestehen. Dadurch kann in einfacher Weise ein Dichtelement geschaffen werden.

Bevorzugt ist das Ventilschließglied als aufvulkanisierte Kunststoffscheibe auf die Außenseite des Bodens des Abdichtungselementes ausgebildet.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittdarstellung einer ersten erfindungsgemäßen Ausführungsform eines Abschaltventils,
Figur 2 eine schematische Schnittdarstellung einer alternativen Ausführungsform des Abschaltventils zu Figur 1,
Figur 3 eine schematische Schnittdarstellung einer alternativen Ausführungsform eines Abschaltventils zu Figur 1,
Figur 4 eine schematische Schnittdarstellung einer alternativen Ausführungsform des Abschaltventils zu Figur 2 und
Figur 5 eine schematische Schnittdarstellung einer weiteren alternativen Ausführungsform des Abschaltventils zu Figur 2.

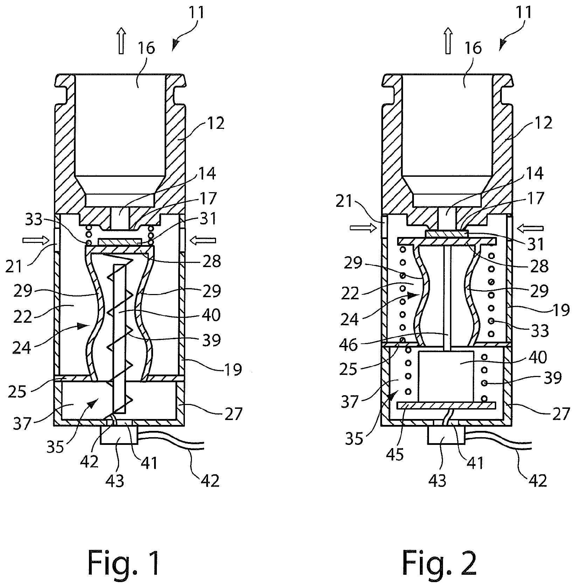

In Figur 1 ist eine schematische Schnittdarstellung einer ersten Ausführungsform eines erfindungsgemäßen Abschaltventils 11 dargestellt. Dieses Abschaltventil 11 ist als ein sogenanntes NO-Ventil (Normally-Open-Ventil) ausgebildet, deren Funktion nachfolgend noch erläutert wird.

Das Abschaltventil 11 umfasst ein Ventilgehäuse 12, welches eine Durchgangsbohrung 14 aufweist, die in eine Auslassöffnung 16 mündet. An einem gegenüberliegenden Ende der Durchlassbohrung 14 ist ein Ventilsitz 17 angeordnet, der beispielsweise als kraterförmige Erhöhung ausgebildet sein kann. An dem Ventilgehäuse 12 ist des Weiteren ein hülsenförmiger Gehäuseabschnitt 19 vorgesehen. Dieser kann einteilig an dem Ventilgehäuse 12 angeordnet sein. Alternativ kann dieser auch durch eine lösbare Verbindung, wie eine Schraubverbindung, oder durch eine stoffschlüssige Verbindung an dem Ventilgehäuse 12 angebracht sein. Dieser hülsenförmige Gehäuseabschnitt 19 weist zumindest eine Einlassöffnung 21 auf, durch welche ein flüssiges oder gasförmiges Medium in einen Regulierraum 22 zugeführt wird. Dieser Regulierraum 22 wird durch ein Abdichtungselement 24 einerseits und dem Ventilgehäuse 12 andererseits sowie dem dazwischen liegenden hülsenförmigen Gehäuseabschnitt 19 begrenzt.

Das Abdichtungselement 24 ist beispielsweise balgförmig ausgebildet und weist einen Befestigungsabschnitt 25 auf, der an dem hülsenförmigen Gehäuseabschnitt 19 angreift. Dieser kann stoffschlüssig mit dem hülsenförmigen Gehäuseabschnitt 19 verbunden oder durch Klemmung mit einem Deckel 27 zum hülsenförmigen Gehäuseabschnitt 19 befestigt sein. Das Abdichtungselement 24 kann beispielsweise aus Edelstahl, Messing, Kupfer oder dergleichen bestehen.

Das Abdichtungselement 24 weist dem Befestigungsabschnitt 25 gegenüber liegend einen Boden 28 auf, der durch einen zylinderförmigen Balgabschnitt 29 zum Befestigungsabschnitt 25 beabstandet ist. An einer Außenseite des Bodens 28 ist ein Ventilschließglied 31 angeordnet, welches durch das Abdichtungselement 24 in eine Schließposition überführbar ist, indem das Ventilschließglied 31 an dem Ventilsitz 17 anliegt und die Durchgangsbohrung 14 schließt. In einer Ausgangsposition des Abschaltventils 11, welche eine Öffnungsposition des Ventilschließgliedes 31 darstellt, ist das Ventilschließglied 31 mit Abstand zum Ventilsitz 17 der Durchgangsbohrung 14 angeordnet, so dass das Medium über die Einlassöffnung 21 in den Regulierraum 22 einströmen kann und von dort aus durch die Durchgangsbohrung 14 zur Auslassöffnung 16 gelangt.

Das Ventilschließglied 31 ist bevorzugt als ein scheiben- oder plattenförmiges Dichtelement ausgebildet, welches insbesondere aus einem aufvulkanisierten Polymer besteht. Alternativ können auch kegel-, zylinder- oder kugelförmige Ventilschließglieder 31 an dem Boden 28 des Abdichtelementes 24 angeordnet und aufgenommen sein.

In dem Regulierraum 22 ist zwischen dem Ventilgehäuse 12 und dem Boden 28 des Abdichtungselementes 24 ein Rückstellelement 33 angeordnet, welches einem Antrieb 35 für eine Stellbewegung des Ventilschließgliedes 31 in eine Schließposition entgegenwirkt. Dieses Rückstellelement 33 kann als Druckfeder ausgebildet sein. Alternativ kann dieses Rückstellelement 33 auch im zylinderförmigen Balgabschnitt 29 des Abdichtungselementes 24 angeordnet sein, wobei dieses dann vorteilhafterweise als Zugfeder ausgebildet ist und beispielsweise zwischen dem Boden 26 und dem Deckel 27 wirkt. Des Weiteren kann der Balgabschnitt 29 als Rückstellelement 33 ausgebildet sein. Ebenso können der Balgabschnitt 29 und das Rückstellelement 33 zu einem Bauteil aneinander gereiht oder miteinander verbunden sein.

Der Deckel 27 sowie das Abdichtungselement 24 umschließen einen innen liegenden Arbeitsraum 37, in dem der Antrieb 35 angeordnet ist. Dieser Arbeitsraum 37 kann ebenfalls abgeschlossen ausgebildet sein, so dass keine Feuchtigkeit oder sonstige schadhaften Stoffe eindringen können.

Der Antrieb 35 umfasst ein Stellelement 39 aus einer Formgedächtnislegierung. Dieses Stellelement ist bevorzugt als Federelement, insbesondere als Druckfederelement, ausgebildet. Diesem Stellelement 39 ist ein Heizelement 40 zugeordnet, welches beispielsweise stab- oder rohrförmig ausgebildet sein kann. Alternativ kann dieses auch käfigartig oder plattenförmig in Form beispielsweise eines PTC-Elementes ausgebildet werden. Des Weiteren kann das Heizelement 40 als Heizlack ausgebildet sein, welcher unmittelbar auf dem Stellelement 39 aufgebracht ist. Das Stellelement 39 erstreckt sich vorteilhafterweise von einer Innenseite des Bodens 28 des Abdichtungselementes 24 bis zur Innenseite des Deckels 27. Innerhalb des Stellelementes 39 und/oder außerhalb des Stellelementes 39 kann das Heizelement 40 positioniert werden. An dem Deckel 27 ist eine Zuführöffnung 41 für die Steuerleitungen 42 vorgesehen, welche mittels eines Dichtelements 43, wie beispielsweise einer Tülle, mediendicht in den Deckel 27 eingeführt werden. Über diese Steuerleitungen 42 wird das Heizelement 40 angesteuert, so dass durch eine Längenänderung des Stellelementes 39 das Abschaltventil 11 öffnet oder schließt. Alternativ kann der Zuführöffnung auch eine Steuerung mit einem Gehäuse zugeordnet sein, welches vorzugsweise die Zuführöffnung abdichtet.

Bevorzugt wird ein Stellelement aus einer Formgedächtnislegierung ausgewählt, welches in einem Temperaturbereich arbeitet, der im jeweiligen Anwendungsfall größer als die maximal vorkommende Umgebungstemperatur ist, und sich eine Martensitstruktur in eine Austenitstruktur umwandelt. Bevorzugt kann beispielsweise bei einem Temperaturbereich von größer 110° eine CuAlBe-Legierung oder dergleichen eingesetzt werden.

In einer nicht näher dargestellten Ausgangsposition ist das Ventilschließglied 31 mit Abstand zum Ventilsitz 17 angeordnet. Das Rückstellelement 33 hält das Abschaltventil 11 in einer Öffnungsposition, das heißt, das Abschaltventil 11 ist geöffnet (normally open). Sobald ein Steuersignal über die Steuerleitung 42 erfolgt, wird das Stellelement 39 erwärmt, so dass die Stellkraft des Stellelementes 39 größer als die gegenwirkende Kraft des Rückstellelements 33 ist, wodurch das Ventilschließglied 31 am Ventilsitz 17 anliegt und die Durchgangsbohrung 14 schließt. Sobald das Steuersignal abschalten wird, kehrt das Ventilschließglied 31 in seine Ausgangsposition zurück, da die Rückstellkraft des Rückstellelementes 33 größer wird als die Stellkraft des Stellelementes 39.

Nach einer alternativen Ausführungsform kann das Abdichtungselement 24 aus einer Formgedächtnislegierung hergestellt sein, so dass ein zusätzliches Stellelement 39 entfallen kann und das Abdichtungselement 24 gleichzeitig auch das Stellelement 39 bildet.

In Figur 2 ist eine alternative Ausführungsform des Abschaltventils 11 zu Figur 1 dargestellt. Dieses Abschaltventil 11 ist als NC-Ventil (Normally-Closed-Ventil) ausgebildet, das heißt, dass dieses Abschaltventil 11 im Ausgangszustand geschlossen ist und das Ventilschließglied 31 den Ventilsitz 17 schließt. Sobald über eine Steuerleitung 42 ein Steuersignal ausgegeben wird, erfolgt eine Aktivierung des Stellelementes 39, wodurch das Ventilschließglied 31 vom Ventilsitz 17 abgehoben wird. Für diese Funktion ist konstruktiv eine abweichende Anordnung zu der in Figur 1 beschriebenen Ausführungsform des Abschaltventils 11 gegeben, wie nachfolgend beschrieben ist.

An dem Befestigungsabschnitt 25 des Abdichtungselementes 24 greift das Stellelement 39 an, welches eine Stellkraft in Richtung auf den Deckel 27 ausübt. Das Stellelement 39 greift dem Befestigungsabschnitt 25 gegenüber liegend an einem Halteelement 45 an, an welchem das Heizelement 40 befestigt ist. Dieses Halteelement 45 ist in der Lage im Arbeitsraum 37 durch das Stellelement 39 veränderbar. Das Heizelement 40 steht über einen Zugstab 46 mit dem Boden 28 des Abdichtungselementes 24 in Verbindung, so dass bei einer Stellbewegung des Stellelementes 39 in Richtung auf den Deckel 27 das Halteelement 45 in Richtung Boden des Deckels 27 gedrückt und gleichzeitig über den Zugstab 46 das Ventilschließglied 31 von dem Ventilsitz 17 abgehoben wird. Gleichzeitig wird das Rückstellelement 33, welches am Boden 28 des Abdichtungselementes 24 einerseits und dem Befestigungsabschnitt 25 des Abdichtungselementes 24 andererseits angreift, zusammen gedrückt. Das Rückstellelement 33 ist als Druckfeder beziehungsweise als Schließfeder ausgebildet, welche das Abschaltventil 11 schließt, sobald ein Steuersignal am Heizelement anliegt. Im Übrigen gelten die analogen Ausführungen zu Figur 1.

Diese Ausführungsformen des Abschaltventils 11 gemäß den Figuren 1 und 2 weisen somit einerseits einen geschlossenen Regulierraum 22 und andererseits einen geschlossenen Arbeitsraum 37 auf, die mediendicht voneinander getrennt sind, so dass Undichtigkeiten, die sich nachteilig auswirken, nicht gegeben sind.

Das Abschaltventil 11 kann durch eine Schraubverbindung in einem nicht näher dargestellten Anschlussblock befestigbar sein. Alternativ kann auch eine Steckverbindung oder sonstige lösbare Verbindung vorgesehen sein. Der Anschlussblock kann als "Zwei-Port-Gehäuse" ausgebildet sein oder als "Vier-Port-Gehäuse", wie beispielsweise ein Gehäuse eines Expansionsventils. Des Weiteren kann die Durchgangsbohrung mit dem daran angeordneten Ventilsitz in dem Ventilgehäuse als austauschbarer Einsatz vorgesehen sein, so dass in Abhängigkeit des Einsatzfalles verschieden große und/oder in der Kontur voneinander abweichende Durchgangsbohrungen einsetzbar sind.

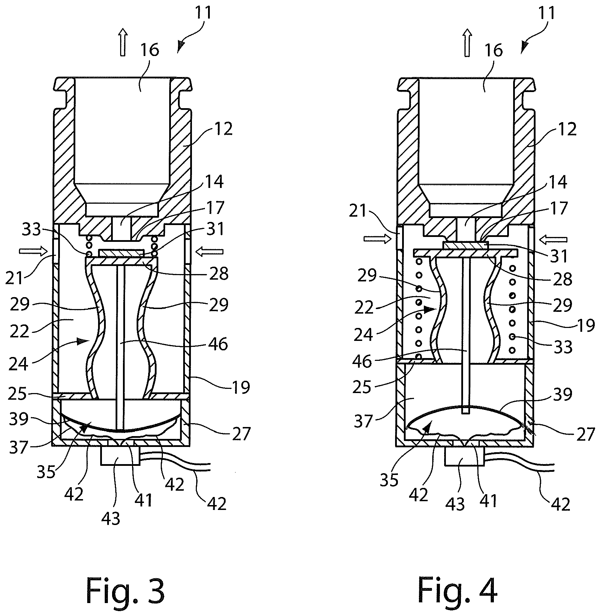

In Figur 3 ist eine alternative Ausführungsform des Abschaltventils 11 zu Figur 1 dargestellt. Bei dieser Ausführungsform ist der Antrieb 35 abweichend zu dem in Figur 1 dargestellt. Der Antrieb 35 gemäß Figur 3 umfasst ebenfalls ein Stellelement 39 aus einer Formgedächtnislegierung, welche beispielsweise als ein gebogenes Stab-, Draht- oder Federelement oder Schalenelement ausgebildet ist, das an dem Deckel 27, insbesondere an einer Seitenwand des Deckels 27, befestigt ist. Dieses Stellelement 39 greift an oder nahe einem Ende des Zugstabes 46 an, der sich bis zur Innenseite am Boden 28 des Abdichtungselementes 24 erstreckt. Zur Ansteuerung des Stellelementes 39 sind Steuerleitungen 42 vorgesehen, welche über die Dichtung 43 zugeführt und von einem Steuerelement angesteuert werden. Zum Schließen des Abschaltventils 11 wird das Stellelement 39 bestromt, und durch die dadurch erzeugte Erwärmung verkürzt sich das Stellelement 39, wodurch eine Stellbewegung des Zugstabes 46 in Richtung auf die Durchgangsbohrung 14 erzeugt wird, wodurch das Ventilschließglied 31 zur Anlage am Ventilsitz 17 geführt wird.

Das Stellelement 39 und der Zugstab 46 mit daran angebrachten Steuerleitungen 42 oder Kontaktstellen zum Anschluss der Steuerleitungen 42 können als Baueinheit vorgesehen sein, welche sowohl für ein NO-Ventil 11 gemäß Figur 3 als auch für NC-Ventil gemäß Figur 4 eingesetzt werden können.

Bei der in Figur 4 dargestellten alternativen Ausführungsform des NC-Ventils 11 erfolgt die Ansteuerung des Ventilschließgliedes 31 beziehungsweise des Abdichtungselementes 24 wiederum durch das Stellelement 39 und den Zugstab 46, die in Figur 2 beschrieben sind. Abweichend ist hierbei lediglich die Ausrichtung der Krümmung des Stellelementes 39 im Arbeitsraum 37 vorgesehen, der durch den Deckel 27 geschlossen ist. Bei einer Bestromung des Stellelementes 39 wird eine Hubbewegung des Zugstabs 46 eingeleitet, wodurch das Ventilschließglied 31 vom Ventilsitz 17 abhebt.

Die Verbindung zwischen dem Stellelement 39 und dem Zugstab 46 kann durch eine Steckverbindung oder eine schwenkbare Verbindung oder dergleichen gegeben sein, so dass durch eine einfache Positionierung des Stellelementes 39 beziehungsweise dessen Anordnung zum Zugelement 46 diese Baueinheit sowohl für ein NO-Ventil 11 gemäß Figur 3 als auch für ein NC-Ventil 11 gemäß Figur 4 einsetzbar ist.

Des Weiteren können der Deckel 27, das Stellelement 39 und der Zugstab 46 und gegebenenfalls einer damit in Verbindung stehenden Steuerung eine Baueinheit bilden. Beispielsweise kann der Deckel 27 Aufnahmen zur Einbringung des Stellelementes 39 aufweisen, wobei diese Aufnahme gleichzeitig die Kontaktierung zwischen den Steuerleitungen 42 und dem Stellelement 39 bilden. Die Aufnahmen sind dabei derart vorgesehen, dass das Stellelement 39 sowohl in einer Ausrichtung gemäß Figur 3 als auch gemäß Figur 4 aufgenommen werden kann. Zusätzlich kann das Abdichtungselement 24 ebenfalls noch an dem Deckel 27 angebracht sein und als Baueinheit ausgebildet werden.

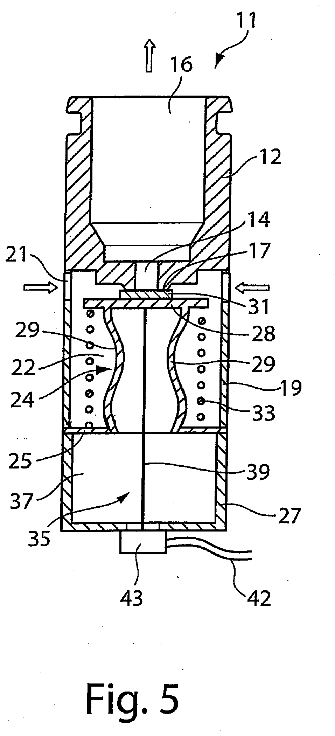

In Figur 5 ist eine weitere alternative Ausgestaltung eines Abschaltventils 11 zu Figur 2 dargestellt. Dies stellt eine weitere Vereinfachung eines solchen Abschaltventils 11 dar. Am Boden 28 des Abdichtungselementes 24 einerseits und am Boden des Deckels 27 andererseits ist das andere Ende des Stellelementes 39 aus einer Formgedächtnislegierung befestigt. Durch Bestromung des Stellelementes 39 kann eine Öffnungsbewegung des Ventilschließgliedes 31 erzeugt werden. Des Weiteren können mehrere drahtförmige Stellelemente 39 parallel angeordnet sein. Ebenso können ein oder mehrere drahtförmige Stellelemente 39 einmal oder mehrmals umgelenkt sein.

Bevorzugt ist bei den zuvor dargestellten Ausführungsformen das Rückstellelement 33 im Regulierraum 22 vorgesehen. Alternativ kann das Rückstellelement 33 auch in den Arbeitsraum 37 verlagert werden, so dass auch dieses Rückstellelement 33 nicht mit dem zu regulierendem Medium in Kontakt kommt.

## Patentansprüche

1. Abschaltventil für flüssige oder gasförmige Medien, mit einem Ventilgehäuse (12), welches zumindest eine Durchgangsbohrung (14) aufweist, die eine Einlassöffnung (21) mit einer Auslassöffnung (16) verbindet, mit einem an dem Ventilgehäuse (12) angeordneten und die Durchgangsbohrung (14) umgebenden Ventilsitz (17), der durch ein unmittelbar anliegendes Ventilschließglied (31) verschließbar ist, wobei das Ventilgehäuse (12) einen hülsenförmigen Gehäuseabschnitt (19) aufweist, in dem die Einlassöffnung (21) vorgesehen ist und welcher die Durchgangsbohrung (14) umgibt mit einem im Ventilgehäuse (12) zwischen der Einlassöffnung (21) und der Auslassöffnung (16) gebildeten Regulierraum (22) mit einem Antrieb (35) zur Ansteuerung der Öffnungs- oder Schließbewegung des Ventilschließgliedes (31), welcher zumindest ein Stellelement (39) aus einer Formgedächtnislegierung aufweist, wobei ein Rückstellelement (33) vorgesehen ist, welches einer Schließ- oder Öffnungsbewegung des Ventilschließgliedes (31) entgegen wirkt, wobei ein Antriebsmodul aus einem Abdichtungselement (24) und einem Deckel (27) sowie dem Antrieb (35) besteht, das an dem hülsenförmigen Gehäuseabschnitt (19) befestigbar ist, wobei der Deckel (27) unter Einspannung eines Befestigungsabschnitts (25) das Abdichtungselement (24) an dem der Durchgangsbohrung (14) gegenüberliegenden Ende des hülsenförmigen Gehäuseabschnitt (19) positioniert und das Abdichtungselement (24) den Regulierraum (22) schließt, und wobei der Antrieb (35) durch das Abdichtungselement (24) getrennt zum Regulierraum (22) angeordnet ist, **dadurch gekennzeichnet, dass** durch die Ansteuerung des Antriebs mittels des Stellelementes aus einer Formgedächtnislegierung geringe Ein- und Ausschaltströme anfallen.

2. Abschaltventil nach Anspruch 1, **dadurch gekennzeichnet, dass** das Abdichtungselement (24) als ein Balgelement mit einem Balgabschnitt (29) ausgebildet ist, welches an dem Ventilgehäuse (12) oder hülsenförmigen Gehäuseabschnitt (19) befestigbar ist und vorzugsweise dessen bewegbarer Boden (28), der an dem Balgabschnitt (29) angeordnet ist, der Durchgangsbohrung (14) zugeordnet wird.

3. Abschaltventil nach einem der vorhergehenden Ansprüche, **dadurch gekennzeichnet, dass** das Abdichtungselement (24) an einem dem Boden (28) gegenüber liegenden Ende den Befestigungsabschnitt (25) aufweist, an welchem der Deckel (27) anordenbar ist, wodurch ein geschlossener, nicht von dem flüssigen oder gasförmigen Medium durchströmbaren Arbeitsraum (37) gebildet ist, in dem der Antrieb (35) angeordnet ist.

4. Abschaltventil nach Anspruch 1, **dadurch gekennzeichnet, dass** an dem Deckel (27) eine Zuführöffnung (41) für Steuerleitungen (42) vorgesehen ist, welche vorzugsweise mit einem Dichtelement (43) verschließbar ist.

5. Abschaltventil nach einem der vorhergehenden Ansprüche, **dadurch gekennzeichnet, dass** das Ventilgehäuse (12), der daran angeordnete hülsenförmige Gehäuseabschnitt (19) und der Deckel (27) zylinderförmig ausgebildet und zumindest teilweise in einen Anschlussblock einsetzbar sind.

6. Abschaltventil nach Anspruch 1, **dadurch gekennzeichnet, dass** der Antrieb (35) ein rohrförmiges, schlauchförmiges, stabförmiges, käfigförmiges oder plattenförmiges Heizelement (40) aufweist, welches dem Stellelement (39) zugeordnet ist.

7. Abschaltventil nach einem der vorhergehenden Ansprüche, **dadurch gekennzeichnet, dass** das Abdichtungselement (24) als Stellelement (39) aus der Formgedächtnislegierung ausgebildet ist.

8. Abschaltventil nach einem der Ansprüche 1 bis 7, **dadurch gekennzeichnet, dass** der Boden (28) des Abdichtungselementes (24), welcher zum Ventilsitz (17) weist, ein Ventilschließglied (31) aufnimmt oder als Ventilschließglied (31) ausgebildet ist und vorzugsweise Ventilschließglied (31) scheibenförmig, kugelförmig, zylinderförmig oder kegelstumpfförmig ausgebildet ist und aus Kunststoff besteht.

9. Abschaltventil nach Anspruch 8, **dadurch gekennzeichnet, dass** das Ventilschließglied (31) durch eine Aufvulkanisierung als scheibenförmiges Dichtelement (43) ausgebildet ist.

10. Abschaltventil nach Anspruch 2, **dadurch gekennzeichnet, dass** der Balgabschnitt (29) als Rückstellelement (33) ausgebildet ist oder dass der Balgabschnitt (29) und das Rückstellelement (33) zu einem Bauteil aneinander gereiht oder miteinander verbunden sind und einen Teil des Rückstellelementes (33) bilden.

11. Abschaltventil nach einem der vorhergehenden Ansprüche, **dadurch gekennzeichnet, dass** der Antrieb (35) zumindest ein Stellelement (39) aus einer Formgedächtnislegierung und einen Zugstab (46) umfasst, wobei das Stellelement (39) am Deckel (27) befestigt ist, der am Ventilgehäuse (12), insbesondere hülsenförmigen Gehäuseabschnitt (19), befestigbar ist und das Stellelement (39) den Zugstab (46) mit einer Stellbewegung ansteuert.

12. Abschaltventil nach einem der vorhergehenden Ansprüche, **dadurch gekennzeichnet, dass** das Rückstellelement (33) im Regulierraum (22) angeordnet ist.

13. Abschaltventil nach einem der vorhergehenden Ansprüche, **dadurch gekennzeichnet, dass** der Deckel (27), das zumindest eine Stellelement (39) und der zumindest eine Zugstab (46) und vorzugsweise eine damit in Verbindung stehende Steuerung eine Baueinheit bilden.

14. Abschaltventil nach einem der Ansprüche 1 bis 12, **dadurch gekennzeichnet, dass** das Abdichtungselement (24), der Deckel (27), das zumindest eine Stellelement (39) und der zumindest eine Zugstab (46) und vorzugsweise eine damit in Verbindung stehende Steuerung eine Baueinheit bilden.

## Claims

1. Shut-off valve for liquid or gaseous media, having a valve housing (12) which has at least one passage hole (14) which connects an inlet opening (21) to an outlet opening (16), having a valve seat (17) arranged on the valve housing (12) and enclosing the passage hole (14), said valve seat is closeable by a directly adjacent valve closing member (31), the valve housing (12) has a sleeve-like housing section (19) in which the inlet opening (21) is provided and which encloses the passage hole (14), having a regulation space (22) formed in the valve housing (12) between the inlet opening (21) and the outlet opening (16), having a drive (35) for controlling the opening or closing movement of the valve-closing element (31) which comprises at least one setting element (39) made from a shape memory alloy, wherein a restoring element (33) is provided which counteracts a closing or opening movement of the valve closing member (31), wherein a drive module consists of the sealing element (24) and a cover (27) and the drive (35) which is fastenable to the sleeve-like housing section (19), wherein the cover (27) positions the sealing element (24) on the end of the sleeve-like housing section (19) of the valve housing (12) opposite the passage hole (14) by fixing a fastening section (25) and the sealing element (24) closes the regulation space (22), wherein the drive (35) is arranged to be separated from the regulation space (22) by a sealing element (24) **characterized in that** low inrush and breaking currents accrue due to control of the drive due to the setting element made from a shape memory alloy.

2. Shut-off valve according to claim 1, **characterised in that** the sealing element (24) is designed as a bellows element having a bellows section (29) which is fastenable to the valve housing (12) or sleeve-like housing section (19) and preferably whose moveable base (28), which is arranged on the bellows section (29), is allocated to the passage hole (14).

3. Shut-off valve according to one of the preceding claims, **characterised in that** the sealing element (24) has a fastening section (25) on an end located opposite the base (28), on which a cover (27) is arrangeable, whereby a closed working space (37) that is not flowable through by the liquid or gaseous medium is formed, in which the drive (35) is arranged.

4. Shut-off valve according to claim 1, **characterised in that** a supply opening (41) for control lines (42) is provided on the cover (27), said supply opening preferably closeable with a sealing element (43).

5. Shut-off valve according to one of the preceding claims, **characterised in that** the valve housing (12), the sleeve-like housing section (19) arranged thereon and the cover (27) are designed to be cylindrical and are at least partially insertable into a connector block.

6. Shut-off valve according to claim 1, **characterised in that** the drive (35) has a tubular, hose-shaped, rod-shaped, cage-shaped or plate-shaped heating element (40) which is allocated to the setting element (39).

7. Shut-off valve according to one of the preceding claims, **characterised in that** the sealing element (24) is designed as a setting element (39) made from the shape memory alloy.

8. Shut-off valve according to one of claims 1 to 7, **characterised in that** the base (28) of the sealing element (24), which points towards the valve seat (17), receives a valve closing member (31) or is designed as a valve closing member (31) and preferably is designed to be disc-shaped, spherical, cylindrical or truncated cone-shaped and consists of plastic.

9. Shut-off valve according to claim 8, **characterised in that** the valve closing member (31) is formed by vulcanisation as a disc-shaped sealing element (43) .

10. Shut-off valve according to claim 2, **characterised in that** the bellows section (29) is designed as a restoring element (33) or that the bellows section (29) and the restoring element (33) are aligned next to each other or are connected to each other to form a component and form one part of the restoring element (33).

11. Shut-off valve according to one of the preceding claims, **characterised in that** the drive (35) comprises at least one setting element (39) made from a shape memory alloy, and a tension rod (46), wherein the setting element (39) is fastened to the cover (27), which is able to be fastened to the valve housing (12), in the particular the sleeve-like housing section (19), and the setting element (39) controls the tension rod (46) with a setting movement.

12. Shut-off valve according to one of the preceding claims, **characterised in that** the restoring element (33) is arranged in the regulation space (22) .

13. Shut-off valve according to one of the preceding claims, **characterised in that** the cover (27), the at least one setting element (39) and the at least one tension rod (46) and preferably a control unit that is in connection thereto form a structural unit.

14. Shut-off valve according to one of claims 1 to 12, **characterised in that** the sealing element (24), the cover (27), the at least one setting element (29) and the at least one tension rod (46) and preferably a control unit that is in connection thereto form a structural unit.

## Revendications

1. Vanne d'arrêt pour fluides liquides ou gazeux, avec un corps de vanne (12) qui présente au moins un trou de passage (14) reliant un orifice d'entrée (21) à un orifice de sortie (16), avec un siège de vanne (17) disposé sur le corps de vanne (12) et entourant le trou de passage (14) et lequel peut être obturé par un organe d'obturation de vanne (31) qui lui est directement contigu, ledit corps de vanne (12) présentant une partie de corps (19) en forme de douille dans laquelle est prévu l'orifice d'entrée (21) et laquelle entoure le trou de passage (14), avec un espace de régulation (22) formé dans le corps de vanne (12), entre l'orifice d'entrée (21) et l'orifice de sortie (16), avec un entraînement (35) destiné à activer le mouvement d'ouverture et de fermeture de l'organe d'obturation de vanne (31) qui présente au moins un élément de réglage (39) réalisé en un alliage à mémoire de forme, un élément de rappel (33) étant prévu, lequel agit en sens inverse d'un mouvement d'ouverture ou de fermeture de l'organe d'obturation de vanne (31), un module d'entraînement étant composé d'un élément d'étanchéité (24) et d'un couvercle (27) ainsi que dudit entraînement (35) et pouvant être fixé à la partie de corps (19) en forme de douille, le couvercle (27) positionnant l'élément d'étanchéité (24) à l'extrémité de la partie de corps (19) en forme de douille qui est située à l'opposé du trou de passage (14) en mettant sous contrainte une partie de fixation (25) et l'élément d'étanchéité (24) obturant l'espace de régulation (22), et l'entraînement (35) étant disposé de manière à être séparé de l'espace de régulation (22) par ledit élément d'étanchéité (24),
**caractérisée en ce que** l'activation de l'entraînement au moyen de l'élément de réglage réalisé en un alliage à mémoire de forme implique des courants d'enclenchement et de coupure faibles.

2. Vanne d'arrêt selon la revendication 1,
**caractérisée en ce que** l'élément d'étanchéité (24) est réalisé en tant qu'élément soufflet avec une partie de soufflet (29), lequel peut être fixé au corps de vanne (12) ou à la partie de corps (19) en forme de douille et **en ce que** son fond mobile (28), qui est disposé sur la partie de soufflet (29), est de préférence affecté au trou de passage (14) .

3. Vanne d'arrêt selon l'une quelconque des revendications précédentes, **caractérisée en ce que** l'élément d'étanchéité (24) présente, à une extrémité située à l'opposé du fond (28), la partie de fixation (25) au niveau de laquelle peut être disposé le couvercle (27), ce qui forme un espace de travail fermé (37) qui ne peut pas être traversé par le fluide liquide ou gazeux et dans lequel est disposé l'entraînement (35).

4. Vanne d'arrêt selon la revendication 1,
**caractérisée en ce qu'**au niveau du couvercle (27) est prévu un orifice d'amenée (41) pour des lignes de commande (42) lequel peut être obturé de préférence par un élément d'étanchéité (43).

5. Vanne d'arrêt selon l'une quelconque des revendications précédentes, **caractérisée en ce que** le corps de vanne (12), la partie de corps (19) en forme de douille qui est disposée de manière contiguë à celui-ci et le couvercle (27) sont de forme cylindrique et peuvent être placés au moins en partie dans un bloc de raccordement.

6. Vanne d'arrêt selon la revendication 1,
**caractérisée en ce que** l'entraînement (35) présente un élément chauffant (40) en forme de tube, de tuyau souple, de tige, de cage ou de plaque lequel est affecté à l'élément de réglage (39) .

7. Vanne d'arrêt selon l'une quelconque des revendications précédentes, **caractérisée en ce que** l'élément d'étanchéité (24) est réalisé en tant qu'élément de réglage (39) fabriqué en alliage à mémoire de forme.

8. Vanne d'arrêt selon l'une quelconque des revendications 1 à 7, **caractérisée en ce que** le fond (28) de l'élément d'étanchéité (24) qui est tourné vers le siège de vanne (17) reçoit un organe d'obturation de vanne (31) ou est réalisé en tant qu'organe d'obturation de vanne (31) et **en ce que** ledit organe d'obturation de vanne (31) est réalisé de préférence en forme de disque, de boule, de cylindre ou de cône tronqué et est en matière plastique.

9. Vanne d'arrêt selon la revendication 8,
**caractérisée en ce que** l'organe d'obturation de vanne (31) est réalisé par vulcanisation en tant qu'élément d'étanchéité (43) en forme de disque.

10. Vanne d'arrêt selon la revendication 2,
**caractérisée en ce que** la partie de soufflet (29) est réalisée en tant qu'élément de rappel (33) ou que la partie de soufflet (29) et l'élément de rappel (33) sont disposés côte à côte ou sont reliés l'un à l'autre de manière à constituer un seul élément et forment une partie de l'élément de rappel (33).

11. Vanne d'arrêt selon l'une quelconque des revendications précédentes, **caractérisée en ce que** l'entraînement (35) comprend au moins un élément de réglage (39) réalisé en un alliage à mémoire de forme et une tige de traction (46), l'élément de réglage (39) étant fixé au couvercle (27) qui peut être fixé au corps de vanne (12), en particulier à la partie de corps (19) en forme de douille, et **en ce que** l'élément de réglage (39) active la tige de traction (46) en lui conférant un mouvement de réglage.

12. Vanne d'arrêt selon l'une quelconque des revendications précédentes, **caractérisée en ce que** l'élément de rappel (33) est disposé dans l'espace de régulation (22).

13. Vanne d'arrêt selon l'une quelconque des revendications précédentes, **caractérisée en ce que** le couvercle (27), ledit au moins un élément de réglage (39) et ladite au moins une tige de traction (46) ainsi que de préférence une commande se trouvant en relation avec ces derniers forment un bloc fonctionnel.

14. Vanne d'arrêt selon l'une quelconque des revendications 1 à 12, **caractérisée en ce que** l'élément d'étanchéité (24), le couvercle (27), ledit au moins un élément de réglage (39) et ladite au moins une tige de traction (46) ainsi que de préférence une commande se trouvant en relation avec ces derniers forment un bloc fonctionnel.
